# EUROPEAN PATENT SPECIFICATION

(11) **EP 2 241 760 B1**
(45) Date of publication and mention of the grant of the patent: **21.06.2017**
(21) Application number: 10250219.2
(22) Date of filing: 09.02.2010
(51) Int. Cl.: F04D 29/08, F16J 15/02, F16J 15/06

(54) **Fan motor casing**
Lüftermotorgehäuse
Boîtier de moteur de ventilateur

(30) Priority: 10.04.2009 KR 20090031467
(43) Date of publication of application: 20.10.2010
(73) Proprietor: Samsung Electronics Co., Ltd., Suwon-si, Gyeonggi-do, 443-742 (KR)
(72) Inventor: Jeon, Kyong-Hui, Seosan-si, Chungcheongnam-do (KR)
(74) Representative: Gulde & Partner

(56) References cited:
- EP-A1- 1 691 082
- EP-A2- 0 916 878
- DE-B- 1 217 153
- US-A- 2 055 103
- US-A- 5 267 740
- US-A- 5 716 051

## Description

The present invention relates to fan motor apparatus with improved sealing reliability and assemblability and reduce noise as defined in the preamble of claim 1. Such a fan motor is known e.g. from EP 1 6910 82.

Generally, a fan motor apparatus operates to blow an air stream by rotating a plurality of vanes with a motor, and is used in a wide range of applications such as air handling units including cooling or heating apparatus, ventilators, or vacuum cleaners. Sealing elements for apparatuses are disclosed in US 2,055,103, US 5,716,051, DE 12 17 153, US 5,267,740, EP 1 691 082 A1 and EP 0 916 878 A2.

However, such a fan motor apparatus generates noise due to friction between the vanes and the air stream and rotation of the motor. Additionally, if air leaks in a fluid path, the air blowing efficiency deteriorates. The noise generated is a very serious problem particularly in a vacuum cleaner which uses a strong suction force. Accordingly, conventional fan motor casings and sealing members have been suggested to solve the problems of noise of the fan motor apparatus and air leakage through the fluid path.

Examples of conventional fan motor casings and sealing members are disclosed in Korean Registered Patent No. 10-0802115, titled 'Fan motor casing' (conventional art 1), U.S Patent No. 6,386,845, titled 'Air blower apparatus' (conventional art 2), U.S Patent No. 5,016,316, titled 'Motor fan cover and sealing arrangement' (conventional art 3), and Japan Patent No. 3407944, titled 'Upright type vacuum cleaner' (conventional art 4).

The fan motor casing of conventional art 1 employs an upper motor casing having an inlet and an outlet duct which is widened in the direction of air discharge, to reduce noise generated by the fan motor casing.

The air blower apparatus of conventional art 2 aims to prevent air leakage from the fluid path, provides low-noise driving and high output, and has a front casing in which an air inlet and an air outlet are formed, a rear casing connected to the front casing with a motor interposed therebetween, and a sealing member formed on an impeller assembly to seal the front casing and the rear casing.

The motor fan cover and sealing arrangement of conventional art 3 has a gasket double-sealing structure which is automatically assembled in position, while double-sealing between a vertical housing and a wall enables automatic assembly of the fan motor apparatus. A conventional upright vacuum cleaner of conventional art 4 employs an air blower which is formed inside a first casing having a suction portion, and a second casing having a discharge portion, via a shock-absorbing member.

The conventional arts explained above provide advantages including reduced noise in the fan motor apparatus, improved sealing, and facilitated vertical assembly of the fan motor apparatus or upright vacuum cleaner.

However, since these conventional arts require independent sealing of connecting portions between outlets and inlets and outer casing portions, sealing has to be performed a plurality of times to seal every portion that requires sealing. Accordingly, fabricating the fan motor apparatus is complicated, and manufacturing cost is increased.

Furthermore, in the conventional arts, since each sealing area of the connecting portion of the fan motor apparatus is separated from the neighbouring sealing areas, the vibration generated during the driving of the fan motor is transmitted entirely to one sealing area, increasing the possibility that the affected sealing area is moved away from its original position. As a result, seal reliability deteriorates.

Furthermore, since sealing areas are separated from the neighbouring sealing areas, the vibration, when generated, vibrates the connecting portions independently. As a result, vibration and noise are increased.

The aim of the invention is to overcome the abovementioned problems occurring in the conventional apparatus, and so provides a fan motor apparatus with an improved structure, providing facilitated sealing operation and increased seal reliability.

Examples mentioned in the following concerning the sealing member for a fan motor apparatus as such and in particular separate from the fan motor apparatus, are useful for the understanding of, but not part of the invention as claimed.

The invention also provides a sealing member for a fan motor apparatus and a fan motor casing, providing further improved sealing in a connecting portion during operation.

The invention also provides a sealing member for a fan motor apparatus and a fan motor casing having reduced vibration generated during operation of the fan motor apparatus.

The present invention also provides a fan motor apparatus which minimizes leakage of motor noise out of an inner casing, and therefore reduces the noise of the fan motor apparatus.

The invention provides a fan motor apparatus comprising:
a cover having an inlet and an outlet formed therein;
an inner casing connected to the cover, to form the inlet;
an outer casing connected to the cover; and
an integral sealing member for sealing a connecting portion between the cover and the outer casing, a connecting portion between the inlet of the cover and the inner casing, and a connecting portion of the outlet of the cover.

The sealing member may comprise an outer circumferential sealing portion for sealing the cover and the outer casing, an inlet sealing portion for sealing the connecting portion between the inlet of the cover and the inner casing, and an outlet sealing portion for sealing the outlet of the cover, the outer circumferential sealing portion, the inlet sealing portion, and the outlet sealing portion being formed integrally with each other.

The outer circumferential sealing portion and the cover may have at least two sealing connections. Preferably, the cover comprises at least two protrusions extending from a lower surface along the outer circumference. The outer circumferential sealing portion may comprise at least two protrusions extending from the upper surface. Accordingly, as the protrusions on the lower surface of the cover, and the protrusions on the upper surface of the outer circumferential sealing portion are engaged with each other, a double-sealing structure is formed.

The outer circumferential sealing portion may further comprise a vibration-proof portion which extends outside the fan motor apparatus and contacts a sidewall of an external apparatus having the fan motor apparatus therein, to prevent vibration of the fan motor apparatus during operation.

The inlet sealing portion may have at least two sealing connections with the cover or the inner casing. Preferably, the inlet sealing portion comprise at least two annular protrusions extending from at least one area of an upper outer circumference or a lower outer circumference of the inlet at the center.

As the cover and the inner casing are connected to each other, with the inlet sealing portion disposed therebetween, the protrusions of the inlet sealing portion in contact with the inner casing are brought into closer contact with the inner casing by the vacuum pressure around the inlet. Additionally, due to discharge pressure formed between the inner casing and the sealing member, the inner casing is brought into closer contact with the inlet sealing member. As a result, seal reliability is improved.

Furthermore, the outlet sealing portion may comprise a wing portion to form the outlet, and an annular protrusion extending along an upper outer circumference of the wing portion. The wing portion may be bent and contacted closely with an external wall on which the fan motor apparatus is mounted, by the discharge pressure of the air stream discharged through the outlet.

The lower surface between the inlet sealing portion and the outlet sealing portion of the sealing member has at least two sealing connections with the cover, formed by the protrusions of the inlet sealing portion and the outlet sealing portion, and the protrusions of the cover.

The inner casing may include an inner casing outlet which has as small an area as possible within a predetermined range, so that at least a predetermined amount of an air stream introduced through the inlet is discharged.

Preferably, the protrusions have annular or arc-shaped configurations. The arc-shaped configurations may include curved arcs, or straight arcs.

Additional aspects and/or advantages of the invention will be set forth in part in the description which follows and, in part, will be obvious from the description, or may be learned by practice of the invention.

The invention will now be described in greater detail, by way of example, with reference to the drawings, in which:
Figure 1 is a perspective view of a fan motor apparatus constructed in accordance with the invention, and employing a sealing member for a fan motor casing, and an inner casing therein;
Figure 2 is an exploded perspective view of the fan motor apparatus of Figure 1;
Figure 3 is an underneath perspective view of a cover of the fan motor apparatus as viewed in the direction A of Figure 2;
Figures 4 and 5 are a top perspective view and an underneath perspective view of a sealing member of the fan motor apparatus as viewed in the directions B and C of Figure 2;
Figure 6 is a cross-section of the fan motor apparatus 1 taken on the line II-II of Figure 1;
Figure 7 illustrates the portion III of Figure 6 in enlargement;
Figure 8 illustrates the portion IV of Figure 6 in enlargement;
Figure 9 illustrates the portion V of Figure 6 in enlargement;
Figure 10 illustrates the portion VI of Figure 6 in enlargement; and
Figure 11 is a view illustrating a fluid flow path within the fan motor apparatus of Figure 1.

Reference will now be made in detail to the example embodiments of the present invention, examples of which are illustrated in the drawings, wherein like reference numerals refer to like elements throughout. The embodiments are described below in order to explain aspects of the present invention by referring to the figures.

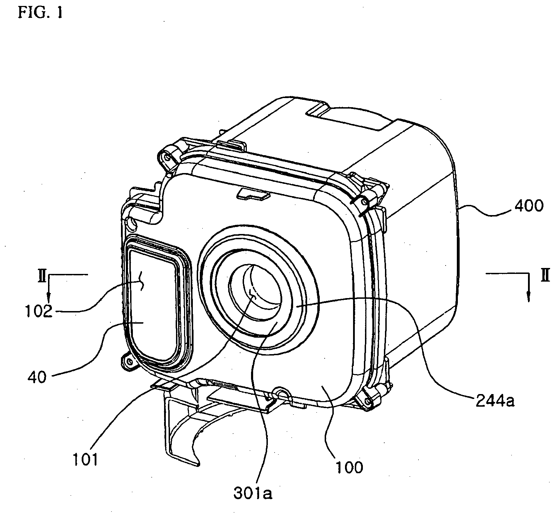

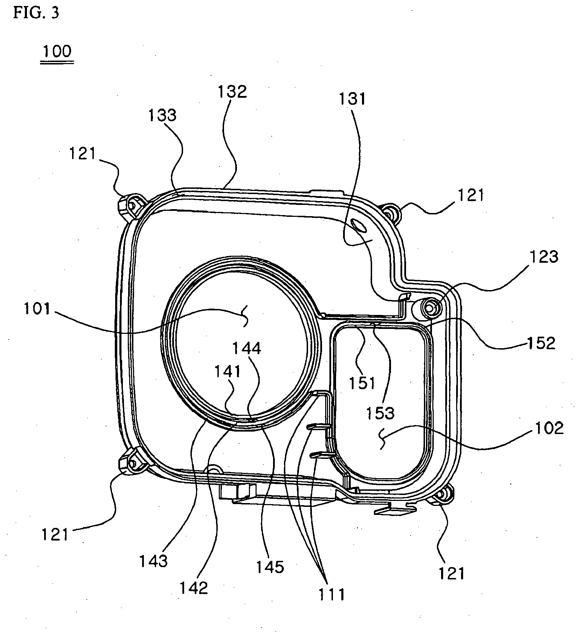

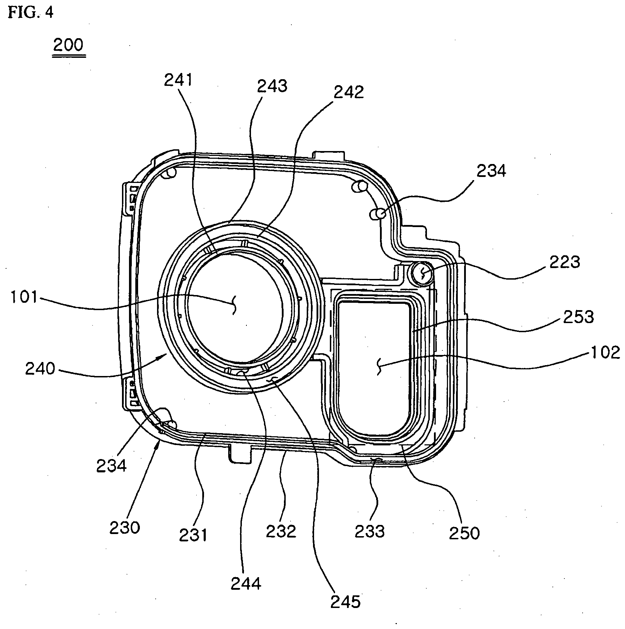

Referring to the drawings, Figures 1 to 4 show a fan motor apparatus 1 including a fan motor 10 having an impeller 20, a cover 100, a filter member 40, a sealing member 200, an inner casing 300, and an outer casing 400.

Throughout the specification, the reference numeral 101 collectively refers to the inlets of the cover 100, the sealing member 200, and the inner casing 300, and the reference numeral 102 collectively refers to the outlets of the cover, the sealing member, and the inner casing. Also referring to the drawings, the right-hand side of each component of the fan motor apparatus 1 is referred to as the 'upper side', while the left-hand side of each component is referred to as the 'lower side'.

The fan motor 10 includes the impeller 20 having an impeller inlet 21, and a plurality of vanes connected to an inner side, and a motor 13 to provide a suction force to draw in an external air stream by rotating the vanes of the impeller 20. The fan motor 10 forcibly moves the air stream, by discharging the air stream, introduced through the inlet 21 of the impeller 20, through a plurality of motor outlets 12 formed in the lower outer circumference of the motor 13. The fan motor 10 is fixed to the internal area defined by the outer casing 400 and the inner casing 300, with a first shock-absorbing member 2 and a second shock-absorbing member 3 disposed therebetween. The first and second shock-absorbing members 2, 3 are made from a resilient material such as rubber so as to perform shock-absorbing functions or sealing functions during the operation of the fan motor 10.

The cover 100 is connected to the outer casing 400, and fixes the inner casing 300 which is connected to the sealing member 200 and the outer portion of the fan motor 10.

The cover 100 includes a first outer circumferential protrusion 131 and a second outer circumferential protrusion 132, the protrusions being formed in annular configurations at a predetermined distance from each other, and each extends from a lower outer circumference of the cover 100 along its outer circumference to fix the outer casing 400 and the sealing member 200. The area between the first and second outer circumference protrusions 131, 132 defines a first outer circumference groove 133 to receive a fourth outer circumference sealing protrusion 236 of the sealing member 200.

The cover 100 also includes a first inlet protrusion 141, a second inlet protrusion 142, and a third inlet protrusion 143, these protrusions being formed in annular configurations at a predetermined distance from each other, and each extends along a lower outer circumference of the opening (i.e. the inlet 101) to fix the inner casing 300 and the sealing member 200. The area between the first and second inlet protrusions 141, 142 defines a first cover inlet groove 144 to receive a fourth inlet sealing protrusion 246, and the area between the second and third inlet protrusions 142, 143 defines a second inlet groove 145 to receive a fifth inlet sealing protrusion 247.

The cover 100 also includes a first outlet protrusion 151 and a second outlet protrusion 152, these protrusions being formed in annular configurations at a predetermined distance from each other, and each extends from a lower outer circumference of the opening (i.e. the outlet 102) along the outer circumference. A first outlet groove 153 is formed on a lower surface between the first and second outlet protrusions 151, 152 to receive a first outlet sealing protrusion 151 of the sealing member 200.

The cover 100 may include one or more fixing hole 123 formed on a lower surface thereof, each such fixing hole being engageable with a fastener such as a screw, or the like, and may include a plurality of fixing portions 121 formed on an edge of the outer side, each having a central opening formed for fixing the cover to the outer casing 400 with fasteners such as screws.

The sealing member 200 includes an outer circumferential sealing portion 230, an inlet sealing portion 240, and an outlet sealing portion 250, which are integrally formed with each other. The sealing member 200 concurrently seals a connecting portion between the outer circumferences of the cover 100 and the outer casing 400, an area between the inlet 101 of the cover and the inlet 101 of the inner casing 300, and an outer surface of a filter member 40 which is seated on a connecting portion between the outlet 102 of the cover and a third inner casing protrusion 306. The sealing member 200 is made from a resilient material to maintain a predetermined level of resilience and also secure contact.

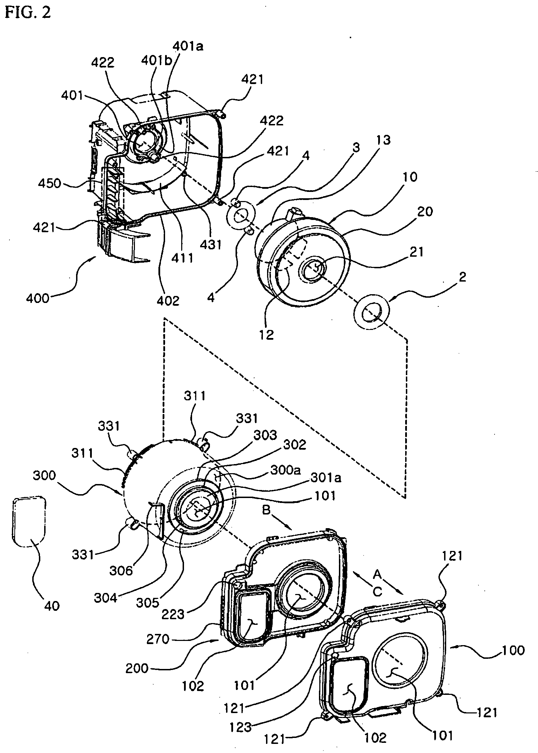

With respect to each element of the sealing member 200, the outer circumferential sealing portion 230 seals the connecting portion between the outer circumferences of the cover 100 and the outer casing 400. To this end, a first outer circumferential sealing protrusion 231 and a second outer circumferential sealing protrusion 232, each of annular configuration, extend from a lower surface (left-hand side in Figure 2) along the entirety of the outer circumference at a predetermined distance from each other. The first outer circumferential sealing protrusion 231 is inside the second outer circumferential sealing protrusion 232. The area between the first and second outer circumferential sealing protrusions 231,232 defines a first outer circumferential sealing groove 233 to be engaged with an upper end 402 of the outer casing 400.

A third outer circumferential sealing protrusion 235 and a fourth outer circumferential sealing protrusion 236 extend from an upper surface (right-hand side in Figure 2) of the outer circumferential sealing portion 230, thereby to form a second outer circumferential sealing groove 237. The third outer circumferential sealing protrusion 235 is inside the fourth outer circumferential sealing protrusion 236. The third outer circumferential sealing protrusion 235 extends to meet a protruded area of the outer side which forms the outlet 102 of the outlet sealing portion 250, and the fourth outer circumferential sealing protrusion 236 is formed in an annular configuration along the entirety of the outer circumference. The first outer circumferential protrusion 131 of the cover 100 is inserted into the second outer circumferential sealing groove 237.

The outer circumferential sealing portion 230 includes a vibration-proof portion 270 which extends outwardly from the outer side of the fourth outer circumferential sealing protrusion 236, forming an insertion groove 271 into which the second outer circumferential protrusion 132 is inserted. The outer circumferential sealing portion 230 also includes a plurality of support protrusions 234 formed on the inner side of the third outer circumferential sealing protrusion 235 to support the sealing member 230 over an area between the cover 100 and the inner casing 300.

The inlet sealing portion 240 includes a central opening to form the inlet 101, and is inserted into, and secured in, the connecting portion between the cover 100 and the inner casing 300 which forms the inlet 101. Accordingly, the inlet sealing portion 240 blocks the air stream introduced through the inlet 101 from leaking to the areas between the cover 100 and the inner casing 300 through the connecting portion.

To this end, the inlet sealing portion 240 includes, in the order from the centre to the outer side of the inlet 101, a first inlet sealing protrusion 241, a second inlet sealing protrusion 242, and a third inlet sealing protrusion 243, formed on a lower surface (left-hand side when viewed in the direction B of Figure 2) of the outer circumference which forms the inlet 101. The first, second and third inlet sealing protrusions 241, 242, 243 are annular and coaxial with each other.

The area between the first and second inlet sealing protrusions 241, 242 defines a first inlet sealing groove 244 into which a first inner casing protrusion 302 is inserted. The lower surface of the first inlet sealing groove 244 extends to the upper side (when viewed in the direction C of Figure 2) to form an annular support portion 244a on the upper side.

The area between the second and third inlet sealing protrusions 242, 243 defines a second inlet sealing groove 245 into which a second inner casing protrusion 303 is inserted.

The inlet sealing portion 240 includes the annular support portion 244a, which is the upper side of the first inlet sealing groove 244, which is formed on the upper side (right-hand side when viewed in the direction C of Figure 2) of the outer circumference of the inlet 101. The annular support portion 244a includes a fourth inlet sealing protrusion 246, and a fifth inlet sealing protrusion 247 which extend in order along the outer circumference of the annular support portion. The fourth inlet sealing protrusion 246 has a circular shape, while the fifth inlet sealing protrusion 247 has an arcuate shape which extends only to the position that faces the outlet sealing portion 150.

The area between the annular support portion 244a and the fourth inlet sealing protrusion 246 defines a third inlet sealing groove 248 into which the first cover inlet protrusion 141 of the cover 100 is inserted. The area between the fourth and fifth inlet sealing protrusions 246, 247defines a fourth inlet sealing groove 249 into which the second cover inlet protrusion 142 is inserted.

The outer circumference of the outlet 102 of the outlet sealing portion 250 includes a wing portion 253 having an end in ' 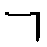 ' configuration which is recessed in an upwards direction, and bent to the inner side of the outlet. The wing portion 253 fixedly supports the filter member 40 connected to the lower surface.

A first annular outlet sealing protrusion 251 extends outside the wing portion 253, from the upper side (right-hand side when viewed in the direction C of Figure 2) of the outlet sealing portion 250. The area between the wing portion 253 and the first outlet sealing protrusion 251 defines a first outlet sealing groove 252 into which the first cover outlet protrusion 151 is inserted.

The outlet sealing portion 250 is formed integrally with the entire sealing member 200, as one side thereof is connected to the inlet sealing portion 240, and the other side is connected to the outer circumferential sealing portion 230. In this case, a sealing fixing hole 223 is formed in the connecting portion of the outlet sealing portion 250, the inlet sealing portion, or the outer circumferential sealing portion 230, to be engaged with a screw thereby to fix the sealing member 200.

The inner casing 300 is formed in a bell-like configuration which has an open lower portion, and which completely surrounds the fan motor 10. The inner casing 300 has the inlet 101 formed in the center of the upper surface (right-hand side in Figure 2), and a protrusion 301 a extends from the outer circumference of the inlet 101 in an upwards direction. The protrusion 301 ais bent inwardly of the inner casing 300, so that its lower surface forms a space to accommodate the first shock-absorbing member 2.

The inner casing 300 includes a first inner casing protrusion 302 and a second inner casing protrusion 303 which extend in sequence from the outer side of the protrusion 301a, around the inlet 101. The area between the protrusion 301a and the first inner casing protrusion 302 defines a first inner casing groove 304 into which the first inlet sealing protrusion 241 is inserted. The area between the first inner casing protrusion 302 and the second inner casing protrusion 303 defines a second inner casing groove 305 into which the second inlet sealing protrusion 242 is inserted.

The inner casing 300 includes the third inner casing protrusion 306 formed on a surface facing the outlet sealing portion 250 to support the lower surface of the filter member 40 and the sealing member 200.

The inner casing 300 also includes an inner casing outlet 300a formed on the lower outer surface to discharge the air stream, which is introduced through the fan motor outlet 12 of the fan motor 10, into an area between the walls of the inner casing 300 and the outer casing 400. The inner casing outlet 300a is formed to have as small an air discharge area as possible, within a range that ensures that the air stream received through the inlet 101 is discharged in at least a predetermined amount.

The inner casing 300 includes a plurality of support wall fixing portions 311 which extend from a lower outer portion facing a support wall 411 of the outer casing 400, to the outer side of the inner casing 300. The support wall fixing portions 311 each include a recess hole extending upwards from a lower surface to receive the support wall 411 therein.

Owing to the structure explained above, the inner casing 300 is capable of blocking noise from the motor 13. Furthermore, since the inner casing outlet 300a has the smallest area as possible within a predetermined range to discharge the air stream received through the inlet 101 above a predetermined amount, the noise of the motor 13 emitted through the inner casing outlet 300a is kept at a minimum level.

The outer casing 400 is formed in a box-shaped configuration having an open upper portion.

A fan motor seating portion 401 is formed inside the outer casing 400, so that the fan motor 10 is seated thereon with the second shock-absorbing member 3 disposed therebetween. The fan motor seating portion 401 includes a protruding portion 401a, and an absorbing member support protrusion 401 b on which the second shock-absorbing member 3 is seated, and a fixing protrusion 422 formed in an area between the protruding portion 401 a for engagement with the shock-absorbing member fixing portion 4 of the second shock-absorbing member 3.

The support wall 411 is formed adjacent to the inner wall of the outer casing 400, for engagement with the support wall fixing portion 311 of the inner casing 300. In order to support the inner casing 300 more firmly, fixing protrusions 411 are formed on the outer surface of the support wall 411, for engagement with the inner casing fixing portion 331, and then for secure joining by a fastener such as screw or a bolt.

A sealing support portion 450 is formed on an area on the upper inner side of the outer casing 400, in contact with the outlet sealing portion 250 of the sealing member 200, to support the outlet sealing portion from below. The sealing support portion 450 includes a plurality of plate-like protrusions and rounded protrusions which are vertically extended.

Accordingly, the second shock-absorbing member 3 is inserted into the fan motor seating portion 401 of the outer casing 400, and the fan motor apparatus 1 is seated on the upper portion of the second shock-absorbing member and connected to the outer casing 400. With the second shock-absorbing member 3 disposed around the upper portion (right-hand side in Figure 2) of the fan motor 10, the inner casing 300 is connected to the support wall 411 of the outer casing 400 so as to surround the fan motor 10 completely. If a recess hole is formed on the lower surface of the support wall fixing portion 311, the upper end of the support wall 411 may engage the recess hole to prevent movement of the inner casing 300 at the upper portion of the outer casing 400 during operation of the fan motor apparatus 1.

The inner casing 300 and the outer casing 400, after connection in the manner explained above, may be secured to each other more firmly by fastening a screw or a bolt in the fixing protrusion 431 and the inner casing fixing portion 331.

After the inner casing 300 is connected to the outer casing 400 as explained above, the cover 100 is connected, with the sealing member 200 disposed around the upper surface (right-hand side in Figure 2) of the inner casing 300.

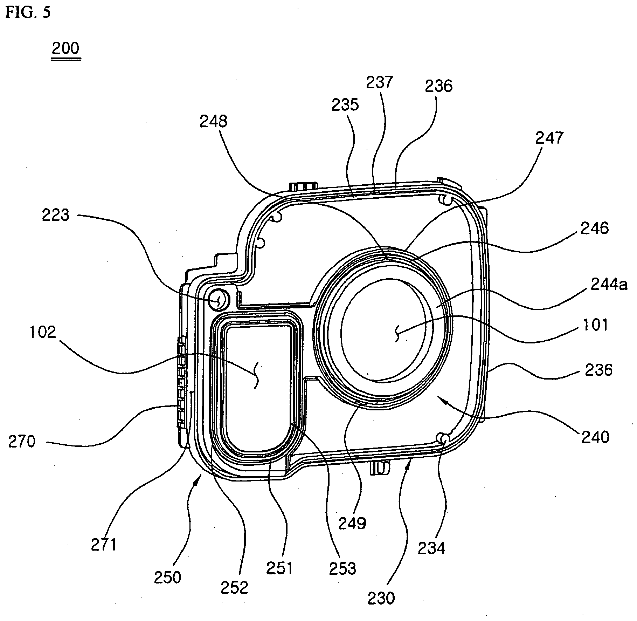

The assembly of the cover 100, the sealing member 200, the inner casing 300, and the outer casing 400 of the fan motor apparatus 1 of Figure 1 will be explained below with reference to Figures 2 to 10.

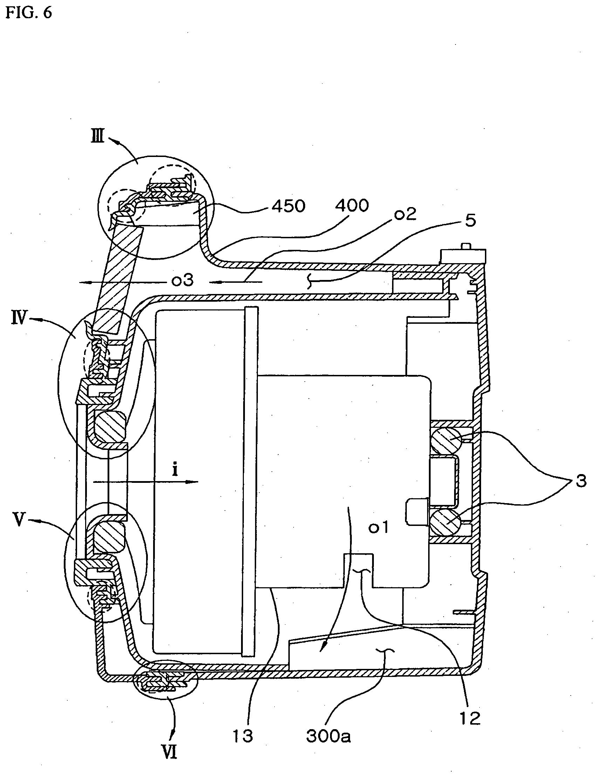

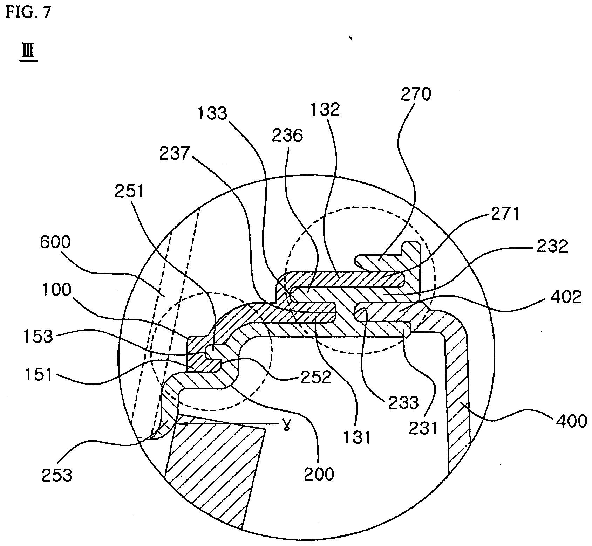

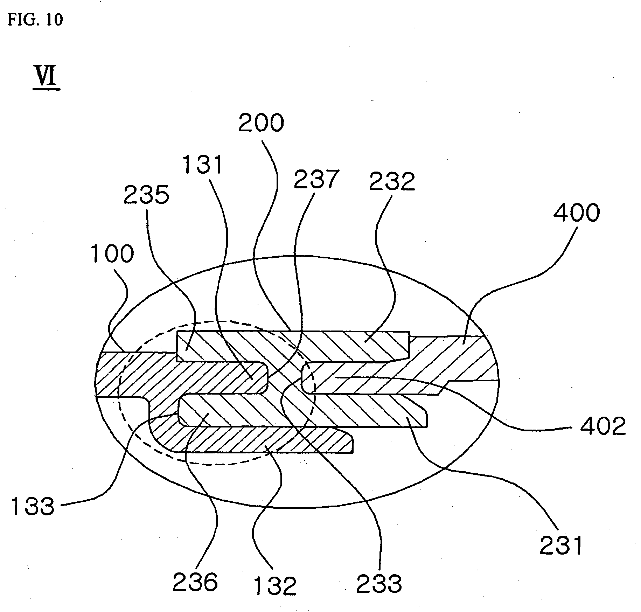

The outer circumferential sealing portion of the sealing member 200 seals a connecting portion between the cover 100 and the outer casing 400. The connecting portion between the outer circumferences of the cover 100 and the outer casing 400 and the structure for sealing thereof will be explained in detail below with reference to Figures 7 and 10 which illustrate enlargements of the portions III and VI of Figure 6.

The outer circumferential sealing portion 230 is connected to an upper surface of the outer casing 400 so that the upper end 402 of the outré casing is inserted into the first outer circumferential sealing groove 233.

The cover 100 is connected to the outer circumferential sealing portion 230 so that the first outer circumferential protrusion 131 of the outer circumferential sealing portion 230 is inserted into the second outer circumferential sealing groove 237, and the fourth outer circumferential sealing protrusion 236 is inserted into the first outer circumferential groove 133, thereby to form a double-sealing structure in the areas indicated with dotted circles.

The second outer circumferential protrusion 132 of the cover 100 is inserted into the insertion groove 271 formed by the vibration-proof portion 270 protruding from the outer circumference of the sealing member 200. Accordingly, as the fan motor apparatus 1 is mounted in an external apparatus such as a vacuum cleaner, an air handling unit or the like, the vibration-proof portion 270 is brought into contact with the surface contacting the external apparatus. Hence, the second outer circumferential protrusion 132 supports the vibration-proof portion 270 as the vibration-proof portion performs vibration-proof operations.

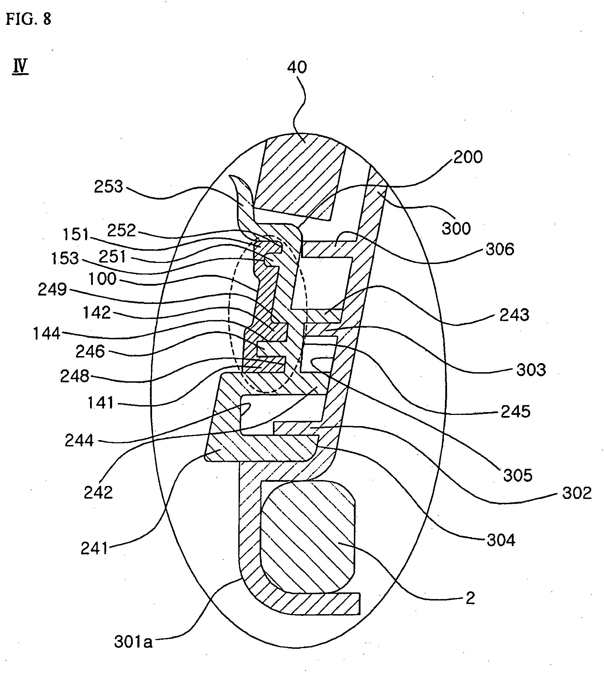

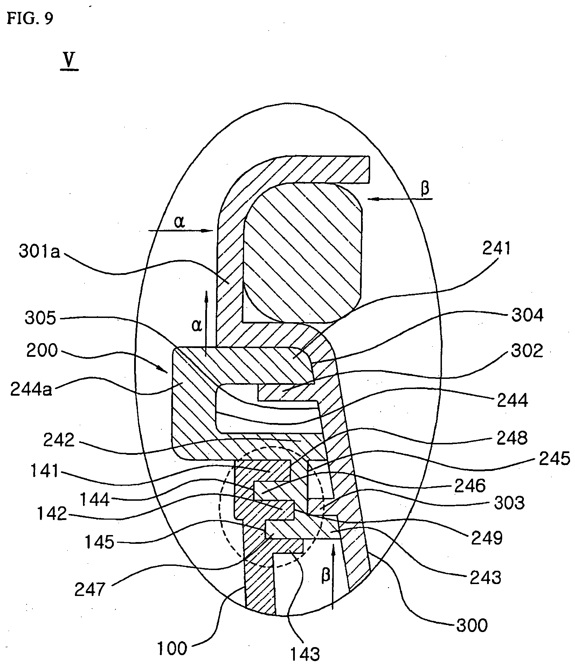

The inlet sealing portion 240 seals a connection portion between the cover 100 forming the inlet 101 and the inner casing 300. The connecting portion for sealing between the cover 100 and the inlet 101 of the inner casing 300 will be explained below with reference to Figures 8 and 9 which illustrate the portions IV and V of Figure 6 in enlargement.

The inlet sealing portion 240 is connected to the inner casing 300, as the annular support portion 244a is inserted into the outer circumference of the protrusion 301a. In this process, the first inlet sealing protrusion 241 is inserted into the first inner casing groove 304. Additionally, the first and second inner casing protrusions 302, 303 are inserted into the first and second inlet sealing grooves 244, 245 formed on the lower surface of the inlet sealing portion 240.

After the inlet sealing portion 240 and the inner casing 300 are connected to each other, the cover 100 is connected to the upper surface of the inlet sealing portion 240 so that the annular support portion 244a of the inlet sealing portion 240 is inserted into the outlet 102 of the cover 100. In this process, the first inlet protrusion 141 of the cover 100 is inserted into the third inlet sealing groove 248, and the second inlet protrusion 142 is inserted into the fourth inlet sealing groove 249. The outer side of the annular support portion 244a is brought into close contact with the inner side of the first inlet protrusion 141 which forms the outlet 102 of the cover 100. As a result, the cover 100 and the inlet sealing portion 240 form a double-sealing structure in an area which does not face the outlet sealing portion 250 and which is indicated by dotted circles.

The inlet 101, formed by the cover 100, the inlet sealing portion 240, and the inner casing 300, may employ a filter member such as sponge, sound-absorbent material, or filtering member, to reduce noise and block ingress of foreign substances.

The outlet sealing portion 250 seals between the cover 100 and the outlet 102. The connecting portion of the outlet 102 for sealing will be explained below with reference to Figures 7 and 8 which illustrate the portions III and IV of Figures 6 in enlargement.

In order to form the outlet 102, the outlet sealing portion 250 is connected to the cover 100, so that the wing portion 253 is inserted into the outlet 102 formed by the first outlet protrusion 151. The first outlet sealing protrusion 251 is inserted into the first outlet groove 153 of the cover 100. As a result, the outlet sealing portion 250 also has a double-sealing structure as indicated by the dotted circles, between the first outlet sealing protrusion 251 and the wing portion 253, and the first outlet sealing protrusion 251 and the first outlet groove 153 of the cover 100. The lower surface of the wing portion 253 at the inlet 101 side is supported by the third inner casing protrusion 306 formed on the inner casing 300. The filter member 40 is mounted in an area between the third inner casing protrusion 306 and the sealing support portion 450 of the outer casing 400, so that the wing portion 253 supports the edge area of the upper surface.

After the cover 100 is connected to the inner casing 300 and the outer casing 400 with the sealing member 200 disposed therebetween, the cover 100 may be fixed more firmly by fastening means such as a screw or a bolt which may be fastened into the fixing hole 223 of the cover 100 and the sealing fixing hole 223 of the sealing member 123. The assembly of the fan motor apparatus 1 is completed, as a plurality of fixing portions 121 on the outer surface of the cover, and a plurality of fixing protrusions 421 of the outer casing 400, are secured firmly by fastening means such as screws or bolts.

According to an aspect of the present invention, the sealing between the sealing member 200 and the cover 100, the inner casing 300 and the outer casing 400 may have double- or multi-sealing structures as occasion demands.

With the connecting structure explained above, the fan motor apparatus 1 draws in an air stream through the cover inlet 101 using the fan motor 10, and discharges the drawn-in air stream through the cover outlet 102, via the space between the inner casing 300 and the outer casing 400.

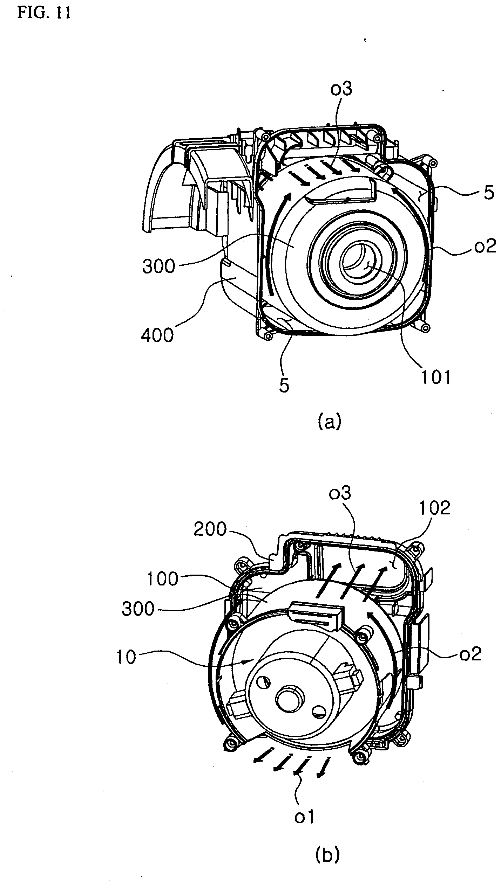

Figure 11 is a view illustrating a fluid flow path within the fan motor apparatus 1 of Figure 1.

The improvement in air flow and sealing effect obtained by the fan motor apparatus 1 employing the sealing member 200 and the fan motor casing will be explained below with reference to Figures 6 to 11.

As the motor 13 of the fan motor apparatus 1 is driven, the suction force generated by rotation of the impeller 20 draws in an external air stream through the inlet 101 (operation i). The drawn-in air stream passes the motor outlet 12 and the inner casing outlet 300a, and is discharged along the outlet path 5 between the inner casing 300 and the outer casing 400 (operation o1). The discharged air stream is moved along the discharge outlet 5 (operation o2), and is discharged out through the outlet 102 (operation o3).

In this process, as illustrated in FIG. 9, the outer area of the inlet 101 is subject to vacuum pressure (α), and the interior of the fan motor apparatus 1 is subject to high discharge pressure (β, γ). The vacuum pressure (α) and the discharge pressure (β, γ) exerted from interior and exterior of the fan motor apparatus 1 enhance the sealing effect of the fan motor apparatus.

More specifically, the vacuum pressure (α) generated outside the inlet 101 brings the protrusion 301a of the casing 300 into close contact with the first shock-absorbing member 2, and brings the first inlet sealing protrusion 241 into close contact with the outer surface of the protrusion 301 a. As a result, the sealing effect at the inlet 101 is increased.

The discharge pressure (β) formed on the outer circumference of the inlet 101 inside the fan motor apparatus 1 brings the fourth inlet sealing protrusion 246 into close contact with the second inner casing protrusion 303 of the inner casing 300. The discharge pressure (β) at the area where the second shock-absorbing member 3 is formed brings the second shock-absorbing member into close contact with the protrusion 301 a of the inner casing 300, and brings the inner casing into close contact with the lower surface of the sealing member 200. Accordingly, sealing between the cover, the sealing member 200, and the inner casing 300 is increased, and an improved sealing effect is obtained.

As illustrated in the enlargement of the portion III of Figure 6, the discharge pressure (β) formed in the area at the outlet 102 side inside the fan motor apparatus 1 brings the wing portion 253 into close contact with a motor chamber partitioning wall 600 of the external apparatus employing the fan motor apparatus, from the outlet 102 side. As a result, sealing between the fan motor apparatus 1 and the external apparatus in the outlet 102 area is improved. Additionally, the discharge pressure (β) at the outlet 102 side brings the filter member 40 into close contact with the wing portion 253, thereby to prevent separation of the filter member 40.

Accordingly, since the outer circumferential sealing portion 230, the inlet sealing portion 240, and the outlet sealing portion 250 are formed integrally with each other, the sealing member 200 concurrently seals the outer connecting portion of the fan motor apparatus 1, and the connecting portion between the inlet 101 and the outlet 102, while maintaining the connected state. Accordingly, vibration of the fan motor apparatus 1 and subsequent noise is reduced.

As explained above, since it is possible to seal the inlet and the outlet in the same plane of the fan motor apparatus 1, and the outer circumference of the fan motor casing concurrently, the manufacture of the fan motor apparatus 1 is facilitated.

Furthermore, since the sealing member 200 seals the outer connecting portion of the fan motor apparatus 1, and the connecting portion between the inlet and the outlet, while maintaining the connected state, it is possible to attenuate the vibration and noise of the fan motor apparatus.

Furthermore, the double-sealing with respect to the connecting portions between the inlet, the outlet and the fan motor casing improves seal reliability.

Furthermore, since the vacuum pressure formed at the inlet and the discharge pressure formed inside the fan motor apparatus bring the contacting surface between the sealing member 200 and the fan motor casing into still closer contact with each other, the fan motor apparatus 1 has improved seal reliability.

Furthermore, since the inner casing outlet is sized to have the smallest area possible within a predetermined range that ensures that an air stream introduced through the inlet is discharged at a predetermined air pressure, emission of noise generated by the motor 13 can be maintained at a minimum level, so that the fan motor apparatus 1 has a reduced noise.

## Claims

1. A fan motor apparatus (1) comprising:
a cover (100) having an inlet (101) and an outlet (102) formed therein; **characterized in that** the fan motor apparatus (1) further comprises:
an inner casing (300) connected to the cover, to form the inlet;
an outer casing (400) connected to the cover; and
an integral sealing member (200) for sealing a connecting portion between the cover (100) and the outer casing (400) a connecting portion between the inlet of the cover (100) and the inner casing (300), and a connecting portion of the outlet of the cover (100).

2. The fan motor apparatus as claimed in claim 1, wherein the sealing member (200) comprises:
an outer circumferential sealing portion (230) for sealing the cover (100) and the outer casing (400);
an inlet sealing portion (240) for sealing the connecting portion between the inlet (21) of the cover and the inner casing (300); and
an outlet sealing portion (250) for sealing the outlet (102) of the cover,
wherein the outer circumferential sealing portion, the inlet sealing portion, and the outlet sealing portion are formed integrally with each other.

3. The fan motor apparatus as claimed in claim 2, wherein the inner casing (300) is brought into close contact with the inlet sealing portion (240) by discharge pressure inside the fan motor apparatus.

4. The fan motor apparatus as claimed in any one of claims 1 to 3, wherein the inner casing (300) comprises an inner casing outlet (300a) having as small an area as possible within a predetermined range, so that at least a predetermined amount of air stream introduced through the inlet (101) is discharged.

5. The fan motor apparatus as claimed in any one of claims 2 to 4 wherein the outer circumferential sealing portion (230) and the cover (100) comprise at least two sealing connections.

6. The fan motor apparatus as claimed in any one of claims 2 to 5, wherein the outer circumferential sealing portion (230) further comprises a vibration-proof portion (270).

7. The fan motor apparatus as claimed in any one of claims 2 to 6 wherein the inlet sealing portion (240) and the cover (100) comprise at least two sealing connections.

8. The fan motor apparatus as claimed in any one of claims 2 to 7, wherein the inlet sealing portion (240) is brought into close contact with the inner casing (300) by vacuum pressure around the inlet (101).

9. The fan motor apparatus as claimed in any one of claims 2 to 8, wherein the outlet sealing portion (250) comprises a wing portion (253) to form the outlet (102), and an annular protrusion (251) extending along an outer upper circumference of the wing portion.

## Patentansprüche

1. Lüftermotorvorrichtung (1), aufweisend:
eine Abdeckung (100), die einen Einlass (101) und einen Auslass (102), die darin ausgebildet sind, aufweist;
**dadurch gekennzeichnet, dass** das Lüftermotorgehäuse (1) ferner aufweist:
ein Innengehäuse (300), das mit der Abdeckung verbunden ist, um den Einlass auszubilden;
ein Außengehäuse (400), das mit der Abdeckung verbunden ist; und
ein einstückiges Dichtungselement (200) zum Abdichten eines Verbindungsabschnitts zwischen der Abdeckung (100) und dem Außengehäuse (400), eines Verbindungsabschnitts zwischen dem Einlass der Abdeckung (100) und dem Innengehäuse (300) und einen Verbindungsabschnitt des Auslasses der Abdeckung (100).

2. Lüftermotorvorrichtung nach Anspruch 1, wobei das Dichtungselement (200) aufweist:
einen äußeren umlaufenden Dichtungsabschnitt (230) zum Abdichten der Abdeckung (100) und des Außengehäuses (400);
einen Einlass-Dichtungsabschnitt (240) zum Abdichten des Verbindungsabschnitts zwischen dem Einlass (21) der Abdeckung und dem Innengehäuse (300); und
einen Auslass-Dichtungsabschnitt (250) zum Abdichten des Auslasses (102) der Abdeckung,
wobei der äußere umlaufende Dichtungsabschnitt, der Einlass-Dichtungsabschnitt und der Auslass-Dichtungsabschnitt einstückig miteinander ausgebildet sind.

3. Lüftermotorvorrichtung nach Anspruch 2, wobei das Innengehäuse (300) durch Auslassdruck in der Lüftermotorvorrichtung in engen Kontakt mit dem Einlass-Dichtungsabschnitt (240) gebracht wird.

4. Lüftermotorvorrichtung nach einem der Ansprüche 1 bis 3, wobei das Innengehäuse (300) einen Innengehäuse-Auslass (300a) aufweist, der eine so kleine Fläche wie möglich in einem vorbestimmten Bereich aufweist, so dass zumindest eine vorbestimmte Menge des durch den Einlass (101) eingeleiteten Luftstroms ausgelassen wird.

5. Lüftermotorvorrichtung nach einem der Ansprüche 2 bis 4, wobei der äußere umlaufende Dichtungsabschnitt (230) und die Abdeckung (100) zumindest zwei Dichtungsverbindungen aufweisen.

6. Lüftermotorvorrichtung nach einem der Ansprüche 2 bis 5, wobei der äußere umlaufende Dichtungsabschnitt (230) ferner einen schwingungsfesten Abschnitt (270) aufweist.

7. Lüftermotorvorrichtung nach einem der Ansprüche 2 bis 6, wobei der Einlass-Dichtungsabschnitt (240) und die Abdeckung (100) zumindest zwei Dichtungsverbindungen aufweisen.

8. Lüftermotorvorrichtung nach einem der Ansprüche 2 bis 7, wobei der Einlass-Dichtungsabschnitt (240) durch Vakuumdruck um den Einlass (101) herum in engen Kontakt mit dem Innengehäuse (300) gebracht wird.

9. Lüftermotorvorrichtung nach einem der Ansprüche 2 bis 8, wobei der Auslass-Dichtungsabschnitt (250) einen Flügelabschnitt (253), um den Auslass (102) auszubilden, und einen ringförmigen Vorsprung (251), der entlang eines äußeren oberen Umfangs des Flügelabschnitts verläuft, aufweist.

## Revendications

1. Dispositif de moteur de ventilateur (1), comprenant:
un couvercle (100) ayant une entrée (101) et une sortie (102) formées dans celui-ci ;
**caractérisé en ce que** le dispositif de moteur de ventilateur (1) comprend en outre :
un boîtier interne (300) relié au couvercle, conçu pour former l'entrée ;
un boîtier externe (400) relié au couvercle ; et
un élément d'étanchéité (200) formé d'un seul tenant, conçu pour étanchéifier une partie de liaison entre le couvercle (100) et le boîtier externe (400), une partie de liaison entre l'entrée du couvercle (100) et le boîtier interne (300), et une partie de liaison de la sortie du couvercle (100).

2. Dispositif de moteur de ventilateur selon la revendication 1, dans lequel l'élément d'étanchéité (200) comprend :
une partie d'étanchéité (230) circonférentielle externe conçue pour étanchéifier le couvercle (100) et le boîtier externe (400) ;
une partie d'étanchéité d'entrée (240) conçue pour étanchéifier la partie de liaison entre l'entrée (21) du couvercle et le boîtier interne (300) ; et
une partie d'étanchéité de sortie (250) conçue pour étanchéifier la sortie (102) du couvercle,
la partie d'étanchéité circonférentielle externe, la partie d'étanchéité d'entrée, et la partie d'étanchéité de sortie étant formées d'un seul tenant les unes avec les autres.

3. Dispositif de moteur de ventilateur selon la revendication 2, dans lequel le boîtier interne (300) est amené en contact étroit avec la partie d'étanchéité d'entrée (240) par une pression de décharge dans le dispositif de moteur de ventilateur.

4. Dispositif de moteur de ventilateur selon l'une des revendications 1 à 3, dans lequel le boîtier interne (300) comprend une sortie de boîtier interne (300a) ayant une superficie aussi petite que possible dans une plage prédéterminée de sorte qu'au moins une quantité prédéterminée d'un flux d'air introduit par l'entrée (101) est déchargée.

5. Dispositif de moteur de ventilateur selon l'une des revendications 2 à 4, dans lequel la partie d'étanchéité (230) circonférentielle externe et le couvercle (100) comprennent au moins deux liaisons d'étanchéité.

6. Dispositif de moteur de ventilateur selon l'une des revendications 2 à 5, dans lequel la partie d'étanchéité (230) circonférentielle externe comprend en outre une partie anti-vibration (270).

7. Dispositif de moteur de ventilateur selon l'une des revendications 2 à 6, dans lequel la partie d'étanchéité d'entrée (240) et le couvercle (100) comprennent au moins deux liaisons d'étanchéité.

8. Dispositif de moteur de ventilateur selon l'une des revendications 2 à 7, dans lequel la partie d'étanchéité d'entrée (240) est amenée en contact étroit avec le boîtier interne (300) par une pression de vide autour de l'entrée (101).

9. Dispositif de moteur de ventilateur selon l'une des revendications 2 à 8, dans lequel la partie d'étanchéité de sortie (250) comprend une partie d'aile (253) pour former la sortie (102) et une saillie annulaire (251) s'étendant le long d'une circonférence supérieure externe de la partie d' aile.
